# EUROPÄISCHE PATENTANMELDUNG

(11) **EP 2 436 941 A1**
(43) Veröffentlichungstag der Anmeldung: **04.04.2012**
(21) Anmeldenummer: 11183391.9
(22) Anmeldetag: 30.09.2011
(51) Int. Cl.: F16C 33/10, F16C 33/66, F16C 33/74, F16C 33/76

(54) **Wellenlagerung bei Kreiselpumpen**

(30) Priorität: 30.09.2010 DE 102010046976
(71) Anmelder: KSB Aktiengesellschaft, 67227 Frankenthal (DE)
(72) Erfinder: Bosbach, Franz, 67251 Freinsheim (DE)

(57) **Zusammenfassung**

Die Erfindung betrifft eine Vorrichtung zur Lagerung eines bewegten Bauteils an einem stationären Bauteil, insbesondere zur Wellenlagerung bei einer Kreiselpumpe, wobei sich zwischen dem bewegten Bauteil und dem stationären Bauteil ein Spalt (6, 12) befindet, wobei sich zumindest innerhalb eines Bereichs (8) des Spaltes (6, 12) ein schmierendes Fluid (9) befindet und mindestens eine Magnetanordnung (7, 14) ein Feld erzeugt, das einer Verschiebung des Fluids (9) entgegenwirkt. Das Fluid (9) setzt sich zumindest teilweise aus einer ionischen Flüssigkeit zusammen, die magnetische Komponenten aufweist.

## Beschreibung

Die Erfindung betrifft eine Vorrichtung zur Lagerung eines bewegten Bauteils an einem stationären Bauteil, insbesondere zur Wellenlagerung bei einer Kreiselpumpe, wobei sich zwischen dem bewegten Bauteil und dem stationären Bauteil ein Spalt befindet, wobei sich zumindest innerhalb eines Bereichs des Spaltes ein schmierendes Fluid befindet und mindestens eine Magnetanordnung ein Feld erzeugt, das einer Verschiebung des Fluids entgegenwirkt.

Lager werden für sich drehende Wellen benötigt, um diese mit geringer Reibung zu halten. Im Kreiselpumpenbau häufig verwendete Elemente sind Gleitlager, bei denen ein bewegtes Teil gegenüber einem feststehenden Teil gleitet. Es wird zwischen Radial-Gleitlagern für Radial- oder Querkräfte und Axial-Gleitlagern für Axial- oder Längskräfte unterschieden. Beim Radial-Gleitlager ist der bewegte Teil üblicherweise ein Zapfen der Achse oder Welle und der feststehende Teil eine Lagerschale. Die Axial-Gleitlager bestehen aus einem bewegten Axiallagerteller und einem feststehenden Teil. Unterschiedliche Lagerformarten bedingen unterschiedliche Eigenschaften und stellen einen wesentlichen Bestandteil bei der Optimierung des Betriebsverhaltens einer Kreiselpumpe dar. Durch geeignete Fertigungsmaße der bewegten und feststehenden Funktionsteile und deren gegenseitige Einstellung entsteht ein Lagerspiel, das meist mit einem flüssigen oder fettartigen Schmierstoff zur Vermeidung von Festkörper- oder Mischreibung versorgt wird. Bei hydrodynamischen Lagern formt sich bei genügender Umfangsgeschwindigkeit aus dem Schmierstoff ein tragender Schmierkeil aus. Der Schmierkeil trennt aufeinander gleitende Teile, so dass das Lager mit Vollschmierung arbeitet. Bei hydrostatischen Lagern wird der flüssige Schmierstoff unter hohem Druck einzelnen Druckkammern der Lauffläche zugeführt und trennt so die Laufpartner auch im Stillstand. Die hydrodynamische und hydrostatische Bauart lassen sich kombinieren.

Wälzlager bestehen aus den Laufringen oder -scheiben sowie den Wälzkörpern. Es werden häufig Käfige eingesetzt, um eine gegenseitige Berührung der Wälzkörper zu verhindern. Eine Unterscheidung der Wälzlager erfolgt nach der Kraftrichtung zwischen Radial- oder Querlager und Axial- oder Längslager. Übergangsformen wie RadialRillenkugellager eignen sich für die radiale und axiale Kraftrichtung. In Radiallagern laufen die Wälzkörper zwischen Ringen und in Axiallagern zwischen Scheiben. Mit steigender Rollgeschwindigkeit machen sich die Fliehkräfte bemerkbar, welche die Wälzkörper nach außen drücken. Aufgrund der größeren Reibungsverluste erhöht sich die Betriebstemperatur des Lagers, weshalb jedes Normallager in seiner Drehzahl nach oben begrenzt ist. Die Grenzdrehzahl lässt sich in Abhängigkeit der Bauart, Größe, Art der Schmierung und Belastung ermitteln. Eine vollständige Trennung der Reibflächen durch einen tragfähigen Schmierfilm findet aufgrund der Abwälzbewegungen der Rollkörper nicht statt. Es ist eine Schmierung mit Fetten oder Ölen vorgesehen. Der Einfluss der Betriebstemperatur des Lagers, die Alterungsbeständigkeit der Fette oder Öle unter Betriebsbedingungen sind bei der Notwendigkeit der Nachschmierung zu berücksichtigen.

In der US 3 746 407 A werden Magnetfluide in ferrodynamischen, reibungsarmen Gleit-und Wälzlagern verwendet, bei denen mittels eines magnetischen Kraftfeldes das Ferrofluid im Bereich des Lagers gehalten wird. Bei einem Magnetfluid, das auch als Ferrofluid bezeichnet wird, sind magnetische Partikel in einem Trägerfluid suspendiert. Das Magnetfeld wirkt einer Verschiebung des Fluids entgegen und hält das Magnetfluid stationär in dem Bereich fest. Dadurch wird eine Abdichtung des Spaltes erreicht.

Bei Magnetfluiden kann es, insbesondere beim Einwirken von Zentrifugal- bzw. Scherkräften, zu einer Entmischung der magnetischen Partikel von der Trägerflüssigkeit kommen. Nachteilig beim Einsatz von Ölen als Trägerflüssigkeit ist zudem deren Neigung bei einem Temperaturanstieg zu verkoken oder zu verdampfen. Um die Verdampfung auszugleichen sind aufwendige Konstruktionen erforderlich, über die neue Trägerflüssigkeit zugeführt wird.

Problematisch ist der Einsatz von Magnetfluiden zur Abdichtung gegenüber mit Flüssigkeit gefüllten Räumen. Die externe Flüssigkeit löst sich in dem Magnetfluid oder bildet eine Emulsion. Abhilfe ist nur durch aufwendige Systeme möglich, bei denen Magnetfluid-Dichtungen mit teuren Gewinde-Wellendichtungen bzw. Fanglabyrinth-Dichtungen kombiniert werden.

Aufgabe der Erfindung ist es, eine Vorrichtung zur Lagerung anzugeben, bei der es nicht zu einem Verdampfen der Trägerflüssigkeit kommt und durch die auch bei sehr hohen Drehgeschwindigkeiten eine hohe Lebensdauer gewährleistet ist.

Diese Aufgabe wird erfindungsgemäß dadurch gelöst, dass sich das Fluid zumindest teilweise aus einer ionischen Flüssigkeit zusammensetzt, die magnetische Komponenten aufweist.

lonische Flüssigkeiten enthalten ausschließlich Ionen. Es sind somit flüssige Salze, ohne dass das Salz in einem Lösungsmittel wie Wasser gelöst ist. Früher waren Salzschmelzen, bei Kochsalz mit einer Schmelztemperatur von über 800 °C, die einzigen bekannten Beispiele für derartige Flüssigkeiten. Ionische Flüssigkeiten sind definiert als Salze, die bei Temperaturen unter 100 °C flüssig sind.

Eigenschaften der ionischen Flüssigkeiten sind thermische Stabilität, geringe Entzündlichkeit und vernachlässigbar kleiner Dampfdruck. Durch Modifikation der Ionen ist die Löslichkeit in Wasser oder organischen Lösungsmitteln weitgehend frei bestimmbar. Durch geeigneten Aufbau der Ionen sind flüssigkristalline Eigenschaften einstellbar, was zu besonders guten Schmiereigenschaften führt.

Das zur Lagerschmierung eingesetzte Fluid kann sich vollständig aus einer ionischen Flüssigkeit zusammensetzen. Es ist auch möglich, dass mehrere ionische Flüssigkeiten das Fluid bilden. Aus Kostengründen kann es unter Umständen auch vorteilhaft sein, dass nur ein Teil des Fluids aus einer ionischen Flüssigkeit besteht und sich der restliche Anteil aus einer anderen Flüssigkeit, beispielsweise einem Öl, zusammensetzt.

Erfindungsgemäß weisen die ionischen Flüssigkeiten auf Magnetismus ansprechende Komponenten auf. Die Komponenten sind magnetisierbar oder besitzen magnetische Eigenschaften. Zweckmäßigerweise sind die Komponenten superparamagnetisch, paramagnetisch oder ferrimagnetisch. Idealerweise sind die Komponenten ferromagnetisch. Von Vorteil ist es, wenn die Komponenten eine permanente Magnetisierung aufweisen. Solche magnetisch ionische Flüssigkeiten können somit mittels der Wirkung eines Magnetfeldes als Sperrflüssigkeit zur Abdichtung eines Spaltes eingesetzt werden. Dadurch wirkt die Flüssigkeit gleichzeitig als Schmier- und als Sperrflüssigkeit. Ein solches Magnetfluid auf Basis einer ionischen Flüssigkeit, zeichnet sich durch eine Reihe interessanter Eigenschaften aus. Zum einen ist es thermisch stabil, so dass es auch bei hohen Temperaturen nicht zur Verkokung kommt. Zudem besitzt das Fluid einen sehr niedrigen, kaum messbaren Dampfdruck. Dadurch wird ein Verdampfen und damit ein Eindicken der Schmierflüssigkeit verhindert.

Vorteilhafterweise ist die an der Lagerstelle verwendete ionische Flüssigkeit nicht mischbar mit den den Spalt oder die Vorrichtung umgebenden Fluiden. Von Vorteil ist es außerdem, wenn die ionische Flüssigkeit Flüssigkristalleigenschaften aufweist.

Die magnetischen Komponenten können in unterschiedlicher Form in der ionischen Flüssigkeit vorliegen. Eine Möglichkeit besteht darin, dass die Komponenten als Partikel vorliegen, die in der ionischen Flüssigkeit suspendiert sind. Die Partikelgröße liegt im Nanobereich, vorzugsweise zwischen 1 und 100 nm, wobei sich insbesondere Partikelgrößen im Bereich von 10 nm als günstig erweisen. Sie bestehen aus magnetischen Stoffen wie Magnetit, Ferrit, Mangan, Nickel, Kobalt oder speziellen Legierungen. Die ionische Flüssigkeit fungiert als Trägerflüssigkeit für die magnetischen Partikel. Zusätzlich kann eine oberflächenaktive Substanz, wie beispielsweise Ölsäure, beigefügt werden, die als monomolekulare Schicht an der Oberfläche der Partikel haftet. Die Radikale polarer Moleküle der oberflächenaktiven Substanz stoßen sich gegenseitig ab und verhindern damit ein Verklumpen der Partikel.

Bei einer besonders vorteilhaften Ausführung der Erfindung sind die magnetischen Komponenten Ionen der ionischen Flüssigkeiten. In diesem Fall ist keine zusätzliche Trägerflüssigkeit erforderlich, da die magnetischen Komponenten selbst Teil der ionischen Flüssigkeit sind. Aufgrund der Ladungseigenschaft von Ionen stoßen sich Komponenten gleicher Ladung automatisch ab, so dass ein Verklumpen verhindert wird, ohne dass zusätzliche Substanzen zugeführt werden müssen. Da die magnetischen Ionen Teil der ionischen Flüssigkeit sind, wird eine Entmischung ausgeschlossen und somit eine hohe Lebensdauer gewährleistet.

Sind die magnetischen Komponenten positiv geladen, bilden sie die Kationen der ionischen Flüssigkeit. Dabei kann auch nur ein Teil der Kationen der ionischen Flüssigkeit aus magnetischen Komponenten bestehen, während die restlichen Kationen keine magnetischen Eigenschaften besitzen. Um einen starken Einfluss des Magnetfeldes zu gewährleisten, erweist es sich allerdings als günstig, wenn sämtliche Kationen der ionischen Flüssigkeit magnetisch sind.

Auch die Anionen der ionischen Flüssigkeit können magnetische Komponenten sein. Auch in diesem Fall ist es möglich, dass nur ein Teil der Anionen magnetisch sind, wobei der Einfluss des Magnetfeldes besonders stark ist, wenn sämtliche Anionen der ionischen Flüssigkeit auf magnetische Felder reagieren.

Bei einer besonders vorteilhaften Variante der Erfindung sind sowohl die Anionen als auch die Kationen der ionischen Flüssigkeit magnetisch.

Die Vorrichtung ist insbesondere als Gleitlager oder als Wälzlager ausgeführt. Zweckmäßigerweise ist dabei zumindest eine Magnetanordnung rotierend an der Welle angeordnet. Dazu kann die Magnetanordnung an der Welle oder an einem an der Welle angeordneten Teil angeordnet sein. Bei der Ausführung als Wälzlager ist die Magnetanordnung vorzugsweise an einem rotierenden Innenring platziert.

Bei einem mit einem feststehenden Außenring und mit einem rotierenden Innenring ausgestatteten Wälzlager sind vorteilhafterweise beidseitig des Innenringes jeweils ringförmige Permanentmagnete und beidseitig des Außenringes jeweils ringförmige Permanentmagnete mit einer zu den Permanentmagneten des Innenringes entgegengesetzten Polung angeordnet.

Magnetkräfte, die elektrostatische Anziehung zwischen den Ionen und zudem die Unlöslichkeit im Medium stellen drei Faktoren zur Sicherheit gegen ein Austragen des Magnetfluides dar. Sollte es dennoch bei Fehlbelastungen durch Druckschwankungen oder Missbrauch zu einer Leckage des Magnetfluides kommen, können diese durch geeignete Sammeleinrichtungen mit Magnetanordnung wie Magnetabscheider gesammelt und wieder dem Lager zugeführt werden.

Besonders vorteilhaft ist eine mit einer erfindungsgemäßen Vorrichtung ausgestattete Kreiselpumpe.

Weitere Merkmale und Vorteile der Erfindung ergeben sich aus der Beschreibung von Ausführungsbeispielen anhand von Zeichnungen und aus den Zeichnungen selbst. Dabei zeigt
- Fig. 1: eine als Gleitlager ausgeführte Wellenlagerung einer Kreiselpumpe,
- Fig. 2: eine als Wälzlager gestaltete Wellenlagerung,
- Fig. 3: eine alternative Wälzlagerung einer Welle mit im Wälzkörper integrierten Magneten mit gegenüberliegenden Polen.

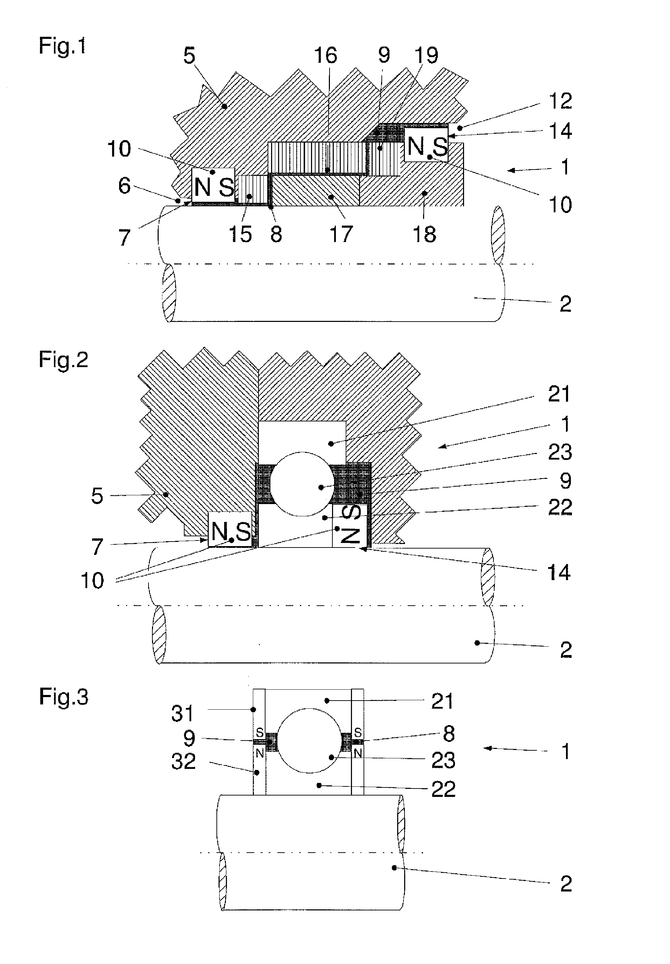

In Fig. 1 ist ein als Gleitlager ausgeführtes Lager zur Lagerung einer Welle dargestellt. In dem Lager 1 ist eine Welle 2 einer nicht dargestellten Kreiselpumpe gelagert. Der

Antrieb der Welle 2 erfolgt über einen nicht dargestellten Elektromotor. Das als Gleitlager ausgeführte Lager 1 besteht aus einem in einem Lagergehäuse 5 befindlichen Lagerträger 5 und daran befestigten Lagerschalen 15, 16. Bei der Lagerschale 15 handelt es sich um eine axiale Lagerschale und bei der Lagerschale 16 um eine radiale Lagerschale. Die Welle 2 trägt ihrerseits eine mit den Lagerschalen 15, 16 zusammenwirkende Lagerbuchse 17 sowie ein Bauteil 18. An dem Bauteil 18 ist ein axialer Lagerteller 19 befestigt.

Zwischen dem Lagerträger 5 mit den daran befestigten Lagerschalen 15, 16 und der rotierenden Welle 2 mit den daran befindlichen Lagerbuchsen 17 und Lagerteller 19 bestehen Spalte 6, 12. Innerhalb der Spalte 6, 12 sind Magnetanordnungen 7, 14 positioniert. Die Magnetanordnung 7 ist an dem Lagerträger 5 befestigt, die Magnetanordnung 14 ist über das Teil 18 mit der Welle 2 verbunden. Die Magnetanordnungen 7, 14 bestehen jeweils aus einem ringförmigen Permanentmagneten 10 mit Nordpol N und Südpol S. In einem Bereich 8 zwischen den Magnetanordnungen 7, 14 ist ein Fluid 9 angeordnet. Erfindungsgemäß setzt sich das Fluid 9 aus einer ionischen Flüssigkeit zusammen, die magnetische Komponenten aufweist. Durch die Magnetanordnungen 7, 14 und die sich durch diese ergebenden Magnetflusslinien wird die magnetische Komponenten aufweisende ionische Flüssigkeit im Bereich 8 gehalten. Das Magnetfeld wirkt also einer axialen Verschiebung des Fluids 9 entgegen. Die Permanentmagnete können alternativ zwischen Polringen platziert sein. Die Permantmagnete können alternativ eine umgekehrte Polung aufweisen.

Fig. 2 zeigt eine als Wälzlager ausgebildete Lagerung einer Welle, insbesondere der Welle einer Kreiselpumpe. In einem feststehenden, in einem Lagergehäuse befindlichen Lagerträger 5 ist ein Außenring 21 befestigt. An einer rotierenden Welle 2 ist ein Innenring 22 befestigt. Zwischen Außenring 21 und Innenring 22 ist ein Bereich zur Aufnahme eines kugeligen Wälzkörpers 23 ausgebildet. Der Wälzkörper kann alternativ zylindrisch, kegelig oder tonnenförmig ausgebildet sein. In einem durch zwei Magnetanordnungen 7, 14 begrenzten Bereich 8 befindet sich ein Fluid 9 als Schmierflüssigkeit, das sich aus einer ionischen Flüssigkeit zusammensetzt, die magnetische Komponenten aufweist. Dabei ist die Magnetanordnung 7 feststehend an dem Lagerträger 5 befestigt und die Magnetanordnung 14 rotierend an dem Innenring 22 befestigt. Die Magnetanordnungen 7, 14 bestehen jeweils aus einem Permanentmagneten 10 mit Nordpol N und Südpol S.

Fig. 3 zeigt eine alternative Gestaltung eines Wälzlagers mit Magnetfluid-Dichtungen. An der Welle 2 sind an dem Innenring 22 zwei ringförmige Permanentmagnete 32 befestigt, deren radial äußerer Bereich als Nordpol N ausgebildet ist. Der Außenring 21 trägt ringförmige Permanentmagnete 31, deren radial innerer Bereich als Südpol S ausgebildet ist. In einem Bereich 8 befindet sich das ionische Magnetfluid. Das Magnetfeld wirkt einer axialen Verschiebung des Fluids 9 entgegen. In dieser Ausführungsvarinate ist der Bereich 8 lokal auf den Wälzlagerbereich konzentriert und dadurch verkleinert. Dies bedingt eine geringe erforderliche Schmierfluidmenge.

## Patentansprüche

1. Vorrichtung zur Lagerung eines bewegten Bauteils an einem stationären Bauteil, insbesondere zur Wellenlagerung bei einer Kreiselpumpe, wobei sich zwischen dem bewegten Bauteil und dem stationären Bauteil ein Spalt (6, 12) befindet, wobei sich zumindest innerhalb eines Bereichs (8) des Spaltes (6, 12) ein schmierendes Fluid (9) befindet und mindestens eine Magnetanordnung (7, 14) ein Feld erzeugt, das einer Verschiebung des Fluids (9) entgegenwirkt, **dadurch gekennzeichnet, dass**
sich das Fluid (9) zumindest teilweise aus einer ionischen Flüssigkeit zusammensetzt, die magnetische Komponenten aufweist.

2. Vorrichtung nach Anspruch 1, **dadurch gekennzeichnet, dass** zumindest ein Teil der Ionen der ionischen Flüssigkeit magnetische Komponenten sind.

3. Vorrichtung nach Anspruch 2, **dadurch gekennzeichnet, dass** zumindest ein Teil der Anionen der ionischen Flüssigkeit magnetische Komponenten sind.

4. Vorrichtung nach Anspruch 2, **dadurch gekennzeichnet, dass** zumindest ein Teil der Kationen der ionischen Flüssigkeit magnetische Komponenten sind.

5. Vorrichtung nach einem der Ansprüche 1 bis 4, **dadurch gekennzeichnet, dass** zumindest ein Teil der magnetischen Komponenten Partikel sind, die in der ionischen Flüssigkeit suspendiert sind.

6. Vorrichtung nach einem der Ansprüche 1 bis 5, **dadurch gekennzeichnet, dass** die ionische Flüssigkeit nicht mischbar mit den die Vorrichtung umgebenden Fluiden ist.

7. Vorrichtung nach einem der Ansprüche 1 bis 6, **dadurch gekennzeichnet, dass** die ionische Flüssigkeit Flüssigkristalleigenschaften aufweist.

8. Vorrichtung nach einem der Ansprüche 1 bis 7, **dadurch gekennzeichnet, dass** die Vorrichtung als Gleitlager ausgeführt ist.

9. Vorrichtung nach einem der Ansprüche 1 bis 8, **dadurch gekennzeichnet, dass** die Vorrichtung als Wälzlager mit einem feststehenden Ring (21) und einem rotierenden Ring (22) ausgeführt ist.

10. Vorrichtung nach einem der Ansprüche 1 bis 9, **dadurch gekennzeichnet, dass** zumindest eine Magnetanordnung (7, 14) rotierend angeordnet ist.

11. Vorrichtung nach Anspruch 9 oder 10, **dadurch gekennzeichnet, dass** beidseitig des rotierenden Ringes (22) jeweils ringförmige Permanentmagnete (32) angeordnet sind und beidseitig des stehenden Ringes (21) jeweils ringförmige Permanentmagnete (31) mit einer zu den Permanentmagneten (32) des rotierenden Ringes (22) entgegengesetzten Polung angeordnet sind.

12. Vorrichtung nach einem der Ansprüche 1 bis 11, **dadurch gekennzeichnet, dass** ausgetragenes Fluid (9) über eine Abscheidevorrichtung gesammelt wird

13. Vorrichtung nach Anspruch 12, **dadurch gekennzeichnet, dass** die Abscheidevorrichtung mit einer Magnetanordnung das Fluid (9) sammelt.

14. Vorrichtung nach Anspruch 12 oder 13, **dadurch gekennzeichnet, dass** das abgeschiedene Fluid (9) der Lagerung wieder zugeführt wird.

15. Kreiselpumpe **gekennzeichnet durch** eine Vorrichtung nach einem der Ansprüche 1 bis 14.
